# FASCICULE DE BREVET EUROPEEN

(11) **EP 3 055 119 B1**
(45) Date de publication et mention de la délivrance du brevet: **20.09.2017**
(21) Numéro de dépôt: 14781853.8
(22) Date de dépôt: 02.10.2014
(51) Int. Cl.: B29C 49/06, B29C 49/42

(54) **DISPOSITIF DE PRÉHENSION D'UN RÉCIPIENT COMPORTANT UN NEZ DANS LEQUEL DES MORS À EXPANSION SONT MAINTENUS CIRCONFÉRENTIELLEMENT EN POSITION**
VORRICHTUNG ZUM GREIFEN EINES BEHÄLTERS MIT EINER NASE, IN DER EXPANSIONSBACKEN IN UMFANGSPOSITION GEHALTEN WERDEN
DEVICE FOR GRIPPING A CONTAINER COMPRISING A NOSE WHEREIN EXPANSION JAWS ARE HELD CIRCUMFERENTIALLY IN POSITION

(30) Priorité: 09.10.2013 FR 1359796
(43) Date de publication de la demande: 17.08.2016
(73) Titulaire: Sidel Participations, 76930 Octeville-sur-Mer (FR)
(72) Inventeur: LE ROUX, Julien, F-76930 Octeville Sur Mer (FR); DUCLOS, Yves-Alban, F-76930 Octeville Sur Mer (FR); HEUZEBROC, Pierre, F-76930 Octeville Sur Mer (FR); LACAILLE, Franck, F-76930 Octeville Sur Mer (FR); CHOMEL, Nicolas, F-76930 Octeville Sur Mer (FR)
(74) Mandataire: Siloret, Patrick
(86) Numéro de dépôt international: PCT/EP2014/071189
(87) Numéro de publication internationale: WO 2015/052079

(56) Documents cités:
- DE-A1-102011 113 310
- US-A- 6 106 273
- US-A1- 2004 047 940
- US-A1- 2005 092 892

## Description

### DOMAINE TECHNIQUE DE L'INVENTION

L'invention concerne un dispositif de préhension d'un récipient en matériau thermoplastique.

L'invention concerne plus particulièrement un dispositif de préhension d'un récipient en matériau thermoplastique, notamment une préforme destinée à être conformée en un récipient final, le dispositif de préhension comportant :
- une tête qui présente un axe principal et qui est adaptée pour être insérée axialement dans le col du récipient ;
- au moins trois mors (en forme de secteur angulaire) répartis régulièrement autour de l'axe du nez et qui sont montés mobiles radialement dans le nez entre une position rétractée permettant le coulissement axial du nez dans le col et une position expansée permettant la préhension du col par rapport au nez par serrage contre la paroi interne du col ;
- des moyens de rappel élastiques des mors vers leur position expansée.

De tels dispositifs apparentés sont par exemple décrits dans les documents US2005/092892, US2004/047940 et US6106273.

### ARRIERE PLAN TECHNIQUE DE L'INVENTION

Il est connu de fabriquer des récipients en matériau thermoplastique par formage de préformes, par exemple par soufflage ou par étirage-soufflage.

Les préformes sont généralement fabriquées par moulage par injection. Une préforme présente un corps qui est destiné à être étiré pour être conformé en récipient final lors de l'opération de formage. La préforme présente aussi un col qui est injecté à sa forme définitive. Il est donc important de protéger le col tout au long du processus de transformation de la préforme en récipient final.

Pour réaliser l'opération de formage, il est nécessaire de chauffer préalablement le corps des préformes froides à une température de transition vitreuse afin de le rendre malléable. Les installations de fabrication en série de récipients comportent à cet effet des fours de chauffage des préformes.

Un four de chauffage présente généralement la forme d'un tunnel dans lequel au moins l'une des parois comporte des moyens de chauffage. Les préformes défilent le long du tunnel devant les moyens de chauffage en tournant sur elles-mêmes afin que leur corps soit chauffé de manière uniforme à une température adaptée pour l'opération de formage.

A cet effet, le four comporte un dispositif de transport des préformes qui se présente généralement sous la forme d'une chaîne fermée dont chaque maillon forme un support mobile muni d'un dispositif associé de préhension d'une préforme.

Chaque dispositif de transport comporte un mandrin d'extrémité qui est formé par une tête dans laquelle des mors sont montés coulissant radialement, les mors étant rappelés vers une position expansée par une bague élastique intercalée entre les mors et le nez. Le nez équipé des mors forme ainsi un mandrin à expansion radiale qui est inséré à force dans le col de la préforme.

Le nez est emboîté avec le col de la préforme lors d'une opération d'insertion parfois appelée "vêtissage".

A la sortie du four, les préformes sont transférées vers une station de formage, par soufflage ou par injection de liquide, au moyen d'une roue de transfert. Lors du passage des préformes depuis le four jusqu'à la roue de transfert, les mandrins sont extraits du col des préformes afin que les préformes soient éjectées du dispositif de transport lors d'une opération d'éjection, parfois appelée "dévêtissage". Les préformes ainsi éjectées sont réceptionnées dans des encoches adaptés de la roue de transfert.

Les machines de fabrication de récipients en grande série doivent permettre un défilement des préformes à grande vitesse dans le four. Cela implique de pouvoir réaliser les opérations d'insertion et les opérations d'éjection des préformes à un rythme suffisamment rapide pour ne pas ralentir le défilement des préformes dans le four.

Dans les dispositifs de préhension connus, les mors sont libres de se déplacer circonférentiellement par rapport au nez. L'ensemble des mors est ainsi libre de tourner autour de l'axe principal du nez.

Un jeu circonférentiel de fonctionnement est généralement prévu entre deux mors adjacents pour permettre un mouvement individuel libre de chaque mors. Ceci permet notamment d'assurer que l'opération d'insertion se déroule dans les meilleures conditions.

Néanmoins, il arrive que tous les mors se retrouvent entassés circonférentiellement d'un côté du nez. Ainsi un unique jeu circonférentiel de fonctionnement est élargi tandis que les autres jeu circonférentiel de fonctionnement sont réduits à néant. Il en résulte que les mors perdent certains degrés de liberté de mouvement, risquant ainsi d'empêcher l'insertion correcte du nez dans le col de la préforme.

En outre, l'unique jeu circonférentiel subsistant cumule les jeux de fonctionnement normalement prévus. La bague en matériau élastomère risque alors de former une hernie dans l'unique jeu circonférentiel, bloquant les mors dans leur position entassée. De plus, dans cette configuration, la bague élastique n'est plus apte à se déformer suffisamment pour permettre un retour des mors vers une position rétractée. Ceci risque donc de compromettre l'opération d'éjection.

### BREF RESUME DE L'INVENTION

L'invention propose un dispositif de préhension perfectionné du type décrit précédemment, caractérisé en ce que l'ensemble des mors est maintenu circonférentiellement dans une position circonférentielle déterminée par rapport au nez par des moyens d'immobilisation circonférentiel individuels d'au moins un mors.

Selon d'autres caractéristiques de l'invention :
- le maintien en position circonférentielle de l'ensemble des mors est réalisé par l'immobilisation circonférentielle individuelle de chaque mors par rapport au nez au moyen d'un pion de guidage qui est fixe par rapport à l'un des éléments parmi ledit mors et le nez, le pion de guidage étant reçu en coulissement dans une rainure qui est fixe par rapport à l'autre des éléments parmi ledit mors et le nez ;
- la rainure et le pion de guidage sont positionnés dans un plan axial orienté selon l'axe radial de déplacement dudit mors ;
- le pion de guidage est fixe par rapport au nez, tandis que la rainure est fixe par rapport audit mors ;
- le pion de guidage présente un axe principal parallèle à l'axe du nez ;
- le pion de guidage présente une forme adaptée pour permettre un débattement angulaire du mors par rapport au nez autour d'un axe parallèle à l'axe du nez ;
- les moyens élastiques de rappel sont formés par une bague en matériau élastomère qui est intercalée radialement entre le nez et les mors ;
- le dispositif de préhension comporte au moins un doigt axial d'éjection du récipient qui est monté coulissant axialement par rapport au nez entre une position supérieure de repos dans laquelle une extrémité libre du doigt est agencée axialement au-dessus des mors, et une position inférieure d'éjection dans laquelle l'extrémité libre du doigt d'éjection est agencée axialement au-dessous des mors,
- lors de son coulissement, chaque doigt d'éjection est susceptible d'entrer en contact avec un cylindre imaginaire circonscrivant les mors en position expansée, un passage étant prévu dans les mors à l'intersection entre le cylindre imaginaire circonscrit et chaque doigt d'éjection pour permettre le coulissement de chaque doigt vers sa position d'éjection sans entrer en collision avec les mors ;
- les mors comportent au moins un méplat formant le passage du doigt associé ;
- le dispositif de préhension comporte une face d'épaulement par rapport au nez qui est destinée à venir en butée contre un buvant du col lorsque le nez est inséré dans le col, le doigt d'éjection passant à travers la face d'épaulement à la faveur d'un orifice qui segmente la surface annulaire de butée destinée à être effectivement en contact avec buvant ;
- le dispositif de préhension comporte un radiateur qui est agencé au-dessus du nez et qui s'étend en saillie radiale par rapport au nez ;
- le radiateur est immobilisé en rotation par une tête formant l'extrémité supérieure d'au moins un des pions de guidage.

L'invention concerne aussi un dispositif de transport d'une préforme dans un four de chauffage d'une installation de formage de récipients en matériau thermoplastique, la préforme étant obtenue par moulage par injection et comportant, à une extrémité axiale supérieure de son corps, un col tubulaire qui est injecté directement à sa forme définitive, caractérisé en ce que la préforme est maintenue sur le dispositif de transport par un dispositif de préhension réalisé selon les enseignements de l'invention.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue schématique de dessus qui représente une installation de fabrication de récipients comportant un four équipé de dispositifs de préhension réalisés selon les enseignements de l'invention ;
- la figure 2 est une vue en perspective qui représente un dispositif de préhension réalisé selon les enseignements de l'invention, une préforme étant saisie par le dispositif de préhension ;
- la figure 3 est une vue en coupe axiale selon le plan de coupe 3-3 de la figure 2 qui montre notamment un pion de guidage d'un mors ;
- la figure 4 est une vue en perspective éclatée qui représente les différents éléments que comporte le dispositif de préhension de la figure 2 ;
- la figure 5 est une vue en coupe transversale selon le plan de coupe 5-5 de la figure 6 qui représente le nez du dispositif de préhension selon l'invention, des doigts d'éjection occupant une position inférieure d'éjection ;
- la figure 6 est une vue de côté qui représente les doigts du dispositif de préhension de la figure 2 en position inférieure d'éjection ;
- la figure 7 est une vue en perspective qui représente en détails l'extrémité inférieure du nez du dispositif de préhension de la figure 2.

### DESCRIPTION DETAILLEE DES FIGURES

Dans la suite de la description, des éléments présentant une structure identique ou des fonctions analogues seront désignés par des mêmes signes de référence.

Dans la suite de la description et dans les revendications, on adoptera à titre non limitatif :
- une orientation axiale qui est parallèle à l'axe "B" principal du nez 30 du dispositif 20 de préhension, qui est dirigée de bas en haut et qui est indiquée par la flèche "A" des figures ;
- des orientations radiales orthogonales à l'axe "B" principal du dispositif 20 de préhension et dirigée de l'intérieur vers l'extérieur en s'éloignant dudit axe "B" principal.

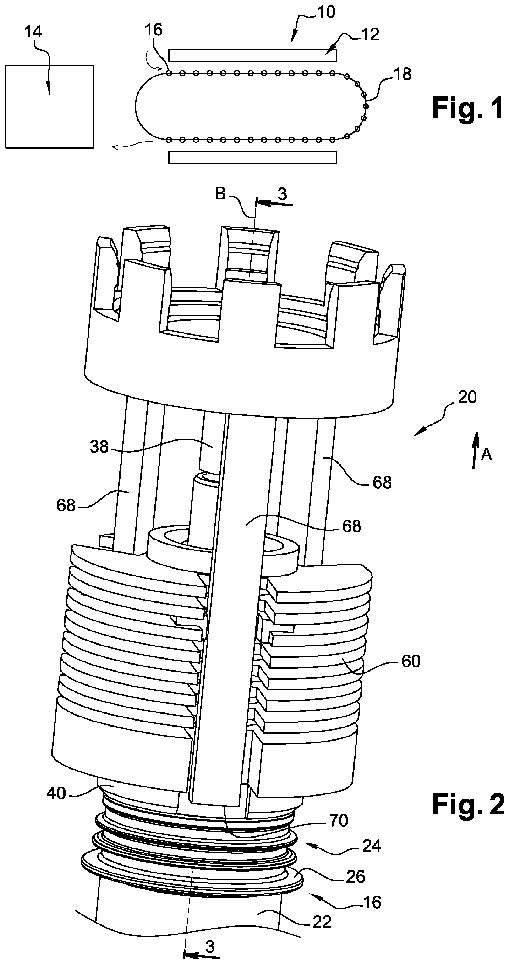

On a représenté schématiquement à la figure 1 une installation 10 de formage de récipients finaux tels que des bouteilles en matériau thermoplastique. Une telle installation 10 comporte un four 12 de chauffage et un poste 14 de formage, par exemple par soufflage ou étirage-soufflage.

Des récipients initiaux, qui sont ici des préformes 16, sont destinés à défiler dans le four 12 de conditionnement avant d'être transférés l'un après l'autre au poste 14 de formage. Le défilement des préformes 16 dans le four 12 est effectué au moyen d'un dispositif 18 de transport comportant une chaîne de convoyage formant une boucle fermée.

La chaîne de convoyage est formée par l'articulation de maillons (non représentés). Chaque maillon comporte au moins un dispositif 20 de préhension d'une préforme 16. Le dispositif 18 de transport comporte de nombreux dispositifs 20 de préhension. Tous les dispositifs 20 de préhension étant sensiblement identiques, un seul de ces dispositifs 20 de préhension sera décrit par la suite.

Comme représenté en partie à la figure 2, une préforme 16 est réalisée en un matériau thermoplastique, tel que du PET, par moulage par injection. La préforme 16 comporte un corps 22 tubulaire qui est ouvert vers le haut par l'intermédiaire d'un col 24. Le col 24 présente une forme tubulaire d'axe "B" d'orientation axiale. Le col 24 est délimité vers le bas par une collerette 26 et vers le haut par un bord d'extrémité supérieur appelé "buvant 28". Le col 24 est injecté à sa forme définitive, tandis que le corps 22 est destiné à être déformé par étirage-soufflage lors d'une étape ultérieure de formage.

Le dispositif 20 de préhension permet de saisir une préforme 16 par son col 24.

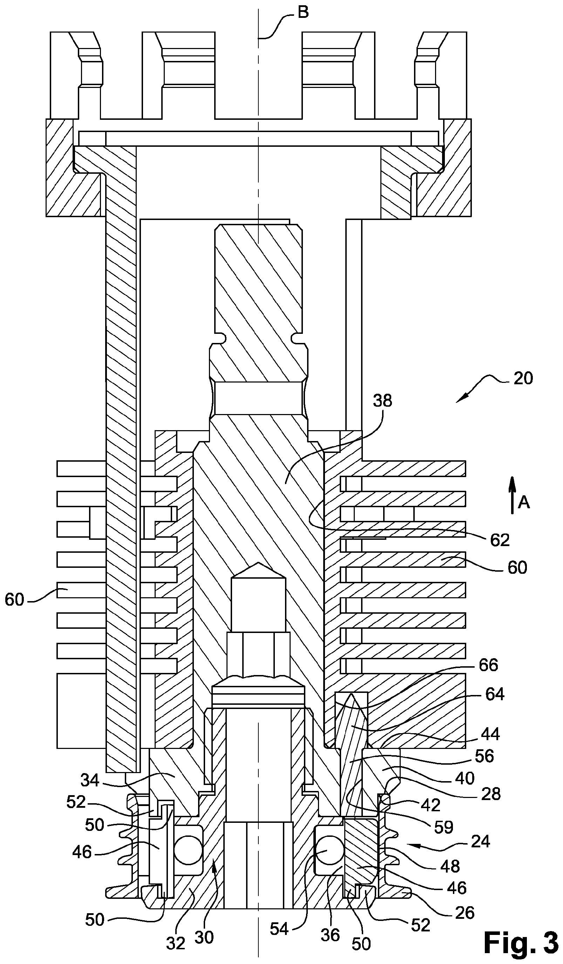

Le dispositif 20 de préhension représenté aux figures 2 et 3 comporte un nez 30 d'extrémité inférieure qui présente une forme globalement cylindrique d'axe "B" principal d'orientation axiale. Comme représenté à la figure 3, le nez 30 est adaptée pour être insérée axialement dans le col 24 du récipient 16. Le nez 30 présente ainsi un diamètre qui est légèrement inférieur au diamètre intérieur du col 24 de la préforme 16 afin de permettre le coulissement axial avec jeu radial du nez 30 par rapport au col 24.

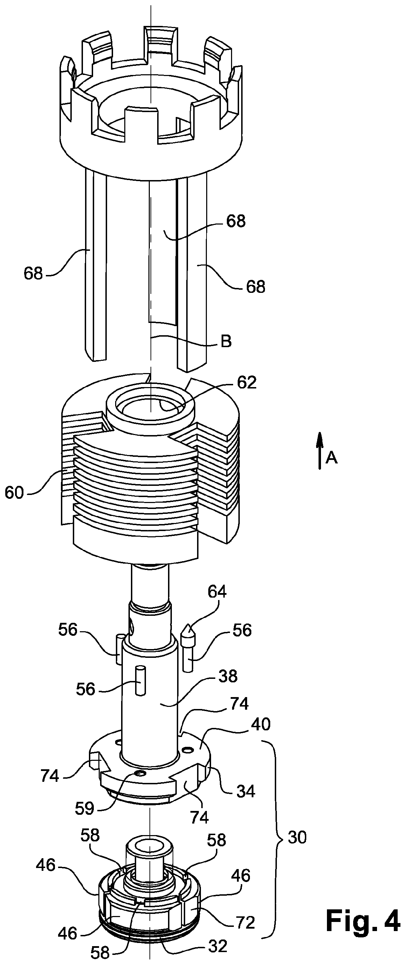

Comme représenté à la figure 4, le nez 30 est réalisé en un élément 32 inférieur et un élément 34 supérieur qui sont fixés l'un à l'autre.

Les deux éléments 32, 34 du nez 30 délimitent axialement un logement 36 annulaire périphérique débouchant radialement vers l'extérieur.

L'élément 34 supérieur est prolongé axialement vers le haut par un arbre 38 d'axe "B" qui est destiné à être relié à un organe (non représenté) commandant le coulissement axial du dispositif 20 de préhension par rapport à la chaîne de convoyage. L'arbre 38 présente un diamètre inférieur à celui du nez 30.

L'élément 34 supérieur comporte aussi un tronçon 40 intermédiaire cylindrique de diamètre supérieur à celui du nez 30 qui est interposé entre le nez 30 et l'arbre 38. Le tronçon 40 intermédiaire délimite vers le bas par une face 42 d'épaulement par rapport au nez 30. Le tronçon 40 intermédiaire comporte aussi une face 44 supérieure.

La face 42 d'épaulement est destinée à venir en butée contre le buvant 28 du col 24 lorsque le nez 30 est inséré dans le col 24. La face 42 d'épaulement comporte ainsi une surface annulaire d'appui qui est formée uniquement par la surface destinée à venir effectivement en contact avec le buvant 28.

Le dispositif 20 de préhension comporte aussi une pluralité de mors 46 qui sont emprisonnés dans le logement 36 du nez 30. Les mors 46 sont répartis régulièrement autour de l'axe "B" du nez 30. Le mors 46 sont ici au nombre de trois.

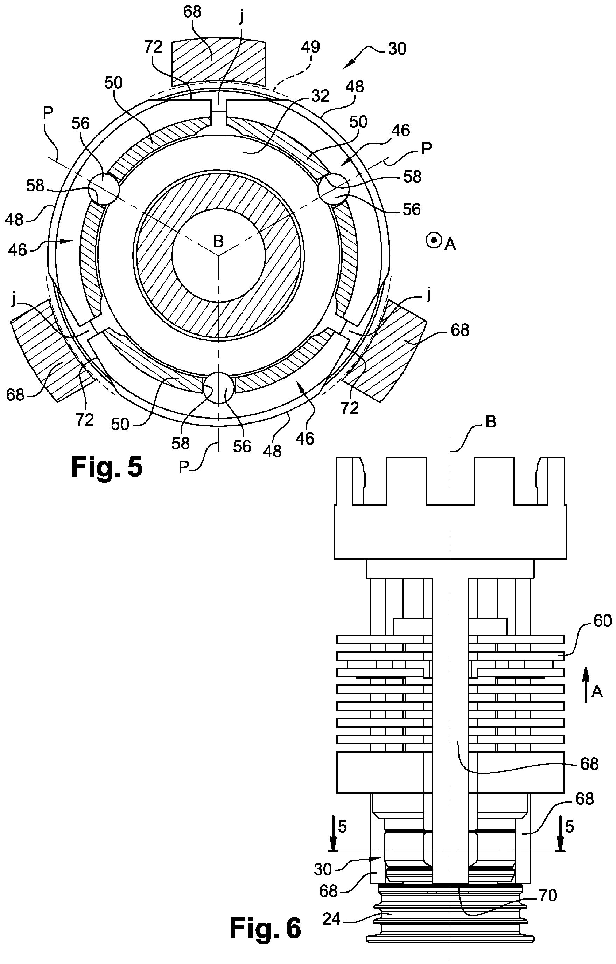

Les mors 46 sont tous identiques. Chaque mors 46 présente la forme d'un segment d'anneau de diamètre légèrement supérieur à celui de la paroi interne du col 24. Chaque mors 46 s'étend sur un secteur angulaire qui est légèrement inférieur à 120° de manière qu'il subsiste un jeu "j" circonférentiel de fonctionnement entre deux mors 46 adjacents lorsqu'ils sont tous logés dans le nez 30, comme représenté à la figure 5.

Ainsi, l'extrémité circonférentielle de chaque mors 46 est espacée circonférentiellement de l'extrémité circonférentiellement en vis-à-vis de chaque mors 46 adjacent uniquement par le jeu circonférentiel "j" de fonctionnement qui est laissé libre. "Laissé libre" signifie qu'aucun obstacle n'est interposé criconférentiellement entre deux mors 46 adjacent.

Chaque mors 46 présente une face 48 externe d'appui globalement en forme de secteur de cylindre qui est destinée à être agencée radialement en vis-à-vis de la paroi interne du col 24. En vue de dessus, comme représenté à la figure 5, les faces 48 externes des mors 46 sont circonscrits par un cylindre 49 imaginaire commun qui est centré sur l'axe "B" et qui est indiqué en pointillés à la figure 5.

Chaque mors 46 est monté mobile radialement dans le nez 30 entre :
- une position rétractée dans laquelle la face 48 d'appui du mors 46 est rétractée radialement vers l'intérieur pour permettant le coulissement axial libre du nez 30 dans le col 24 ; et
- une position expansée dans laquelle la face 48 d'appui est déplacée radialement vers l'extérieur en saillie radiale par rapport au nez 30 pour permettre la préhension du col 24 par rapport au nez 30 par serrage de la face 48 d'appui contre la paroi cylindrique interne du col 24.

Chaque mors 46 est maintenu prisonnier dans le nez 30 par l'intermédiaire de rebords 50 axiaux inférieur, respectivement supérieur, qui sont destinés à venir en butée radiale contre une jupe 52 axiale associée de l'élément 32 inférieur, respectivement de l'élément 34 supérieur. Ceci permet de retenir les mors 46 prisonniers dans le nez 30. Chaque jupe 52 axiale délimite ici vers l'extérieur une gorge annulaire formée respectivement dans la face supérieure de l'élément 32 inférieur et dans la face inférieure de l'élément 34 supérieur.

Le nez 30 comporte aussi des moyens de rappel élastiques des mors 46 vers leur position expansée. Dans l'exemple représenté aux figures, les moyens élastiques de rappel sont formés par une bague 54 en matériau élastomère qui est intercalée radialement entre le fond du logement 36 du nez 30 et les mors 46.

Le nez 30 est ainsi destiné à être inséré "à force" dans le col 24. A cet effet, chaque mors 46 présente un angle de dépouille permettant de commander automatiquement le coulissement des mors 46 vers leur position rétractée lors de l'insertion axiale dans le col 24 par contact des mors 46 avec le buvant 28.

Le logement 36 du nez 30 présente une forme permettant à chaque mors 46 un débattement limité en pivotement autour d'un axe axial et autour d'un axe circonférentiel. Ces degrés de liberté permettent d'éviter le grippage des mors 46 dans le nez 30 lors de l'insertion à force du nez 30 dans le col 24 de la préforme 16.

L'ensemble des mors 46 est maintenu circonférentiellement dans une position circonférentielle déterminée par rapport au nez 30. Ainsi, les mors 46 ne peuvent pas tourner autour de l'axe "B" du nez 30. Les mors 46 sont maintenus dans leur position circonférentielle déterminée quelle que soit leur position radiale entre la position rétractée et la position expansée.

A cet effet, chaque mors 46 est immobilisé individuellement dans une direction circonférentielle par rapport au nez 30. Chaque mors 46 est ici immobilisé au moyen d'un unique pion 56 associé de guidage qui est fixe par rapport à l'un des éléments parmi ledit mors 46 et le nez 30, le pion 56 de guidage étant reçu en coulissement radial dans une rainure 58 qui est fixe par rapport à l'autre des éléments parmi ledit mors 46 et le nez 30.

Comme cela est représenté aux figures 4 et 5, dans le présent exemple, le pion 56 de guidage est fixe par rapport au nez 30, tandis que la rainure 58 est fixe par rapport audit mors 46.

Chaque pion 56 de guidage présente ici un axe principal orienté axialement. Chaque pion est reçu dans un orifice 59 traversant le tronçon 40 intermédiaire de l'élément 34 supérieur du nez 30, au droit du rebord 50 supérieur du mors 46 associé.

La rainure 58 est formée par une encoche réalisée dans le rebord 50 supérieur du mors 46 associé. Ainsi, lorsque le pion 56 de guidage est inséré dans son orifice 59, son extrémité est engagée dans la rainure 58 du mors 46 associé.

Comme représenté à la figure 5, pour chaque mors 46, la rainure 58 et le pion 56 de guidage sont positionnés dans un plan "P" axial, c'est-à-dire un plan contenant l'axe "B" principal du nez 30, le plan "P" étant orienté selon l'axe radial de déplacement dudit mors 46. Dans la configuration représentée aux figures, la rainure 58 est ainsi agencée au milieu du mors 46 selon la direction circonférentielle, et elle est orientée radialement. Ceci permet de préserver le débattement angulaire du mors 46 associé par rapport au nez 30 autour d'un axe parallèle à l'axe "B" du nez 30.

De plus, le pion 56 de guidage présente une forme adaptée pour permettre ledit débattement angulaire. Le pion 56 de guidage présente par exemple une section transversale circulaire. Ainsi, la liaison mécanique créée entre le mors 46 et le nez 30 n'est pas, au sens strict, une liaison glissière du fait de cette possibilité de débattement angulaire.

Comme représenté aux figures 2 à 4, le dispositif 20 de préhension comporte un radiateur 60 à ailettes qui présente une forme globalement cylindrique d'axe principal "B". Le radiateur 60 est transpercé axialement par un orifice 62 central.

L'arbre 38 est emmanché dans l'orifice 62 central du radiateur 60 de manière qu'une face inférieure du radiateur 60 soit en appui plan contre la face 44 supérieure de l'élément 34 supérieur du nez 30. Le radiateur 60 est ainsi agencé au-dessus du nez 30.

Le radiateur 60 présente un diamètre extérieur supérieur à celui du tronçon 40 intermédiaire de manière à s'étendre en saillie radiale par rapport au nez 30.

Le radiateur 60 est immobilisé en rotation autour de l'axe "B" par une tête 64 d'extrémité supérieure d'au moins un pion 56 de guidage, comme cela est illustré à la figure 3. A cet effet, le radiateur 60 présente un lamage 66 adapté pour loger la tête 64.

La tête 64 présente un diamètre supérieur à celui de l'orifice 59 de passage du pion 56 de guidage. Ainsi, la tête 64 est susceptible de venir en butée contre la face 44 supérieure de l'élément 34 supérieur pour positionner axialement le pion 56 de guidage par rapport au nez 30. Ceci évite notamment que le pion n'entre en contact avec le mors 46 associé.

Seul un pion 56 de guidage comporte une tête 64 saillante, les autres pions 56 étant fixés axialement dans leur orifice 59 respectif soit par insertion à force, soit par une tête non saillante (non représentée) par rapport à la face 44 supérieure du tronçon 40 intermédiaire.

En variante non représentée de l'invention, les trois pions de guidage comportent une tête saillante.

Le dispositif 20 de préhension comporte des moyens d'éjection de la préforme 16 lorsque le nez 30 est maintenu dans le col 24 par les mors 46.

Les moyens d'éjection comportent au moins un doigt 68 axial d'éjection. Les moyens d'éjection comportent ici trois doigts 68 d'éjection identiques qui sont répartis angulairement autour de l'axe "B" principal du nez 30. Une extrémité 70 inférieure libre de chaque doigt 68 est agencé axialement au droit du buvant 28 du col 24.

Comme représenté à la figure 5, chaque doigt 68 est ici agencé radialement en vis-à-vis d'un jeu circonférentiel associé réservé entre deux mors 46 adjacent.

Les doigts 68 sont montés solidairement coulissants axialement par rapport au nez 30 entre :
- une position supérieure de repos, comme illustrée à la figure 2, dans laquelle l'extrémité 70 inférieure libre de chaque doigt 68 est agencée axialement au-dessus du nez 30 ; et
- une position inférieure d'éjection, comme illustrée à la figure 6, dans laquelle l'extrémité 70 libre du doigt d'éjection est agencée axialement au-dessous du nez 30.

Chaque doigt 68 d'éjection empiète, ou tout au moins est tangent, avec le cylindre 49 droit de révolution imaginaire circonscrivant les mors 46 en position expansée, le cylindre 49 imaginaire étant centré sur l'axe "B". Pour éviter que l'extrémité 70 libre des doigts 68 ne bute contre un mors 46 en position expansée, un passage 72 est prévu dans les mors 46 à l'intersection entre le cylindre 49 circonscrit et chaque doigt 68 d'éjection pour permettre le coulissement de chaque doigt 68 vers sa position d'éjection. Le passage 72 est réalisé de manière à réserver un jeu radial suffisant entre les doigts 68 et les mors 46 pour assurer qu'aucune collision n'aura lieu entre ces deux éléments même en position expansée des mors 46.

Dans l'exemple représenté aux figures, les mors 46 comportent au moins un méplat formant le passage 72 du doigt 68 associé. Dans la configuration représentée aux figures, le passage 72 associé à un doigt 68 est formé par un méplat réalisé à cheval sur deux mors 46 adjacents.

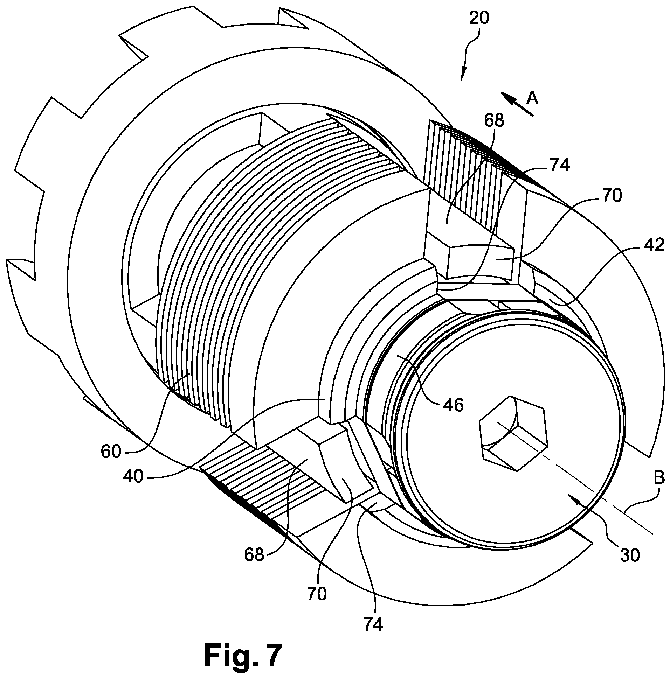

Comme représenté à la figure 7, le tronçon 40 intermédiaire et le radiateur 60 comportent aussi des passages axiaux permettant chacun de loger un des doigts 68.

Chaque passage débouche vers le bas dans la face 42 d'épaulement par rapport au nez 30, à la faveur d'un orifice 74 associé.

L'extrémité 70 libre de chaque doigt 68 est destinée à venir solliciter le buvant 28 du col 24 pour éjecter la préforme par rapport aux mors 46. Pour assurer un bon appui de doigts 68 sur le buvant 28, chaque doigt prend appui sur l'épaisseur totale d'un secteur angulaire du buvant 28. De ce fait, la surface annulaire d'appui de la face 42 d'épaulement est segmentée par les orifices 74 de passage des doigts 68. Il en résulte que, lorsque les doigts 68 entrent en contact avec le buvant 28 lors d'une opération d'éjection, certains secteurs angulaires, dits d'appui, du buvant 28 sont en appui uniquement sur la face 42 d'épaulement, tandis que d'autres secteurs angulaires, dits d'éjection, du buvant 28 sont en contact uniquement avec un doigt 68 associé, les secteurs d'appui étant agencés en alternance circonférentielle avec les secteurs d'éjection.

Lors du montage du dispositif 20 de préhension, en référence à la figure 4, les mors 46 et la bague 54 élastiques sont tout d'abord emprisonnés entre les deux éléments 32, 34 inférieur et supérieur pour former le nez 30. Les passages 72 des mors sont agencés en coïncidence axiale avec les orifices 74 de passage de la face 42 d'épaulement.

Puis, les pions 56 de guidage sont insérés axialement vers le bas dans leurs orifices 59 associés de manière à immobiliser les mors 46 dans leur position circonférentielle déterminée par rapport au nez 30. Les passages 72 des mors 46 demeurent ainsi constamment en coïncidence avec les orifices 74 de passage de l'élément 34 supérieur du nez 30.

Ensuite, le radiateur 60 est enfilé sur l'arbre 38 de manière que les têtes 64 des pions 56 de guidage en saillie soient reçues dans les lamages 66 du radiateur. Ceci permet d'immobiliser angulairement le radiateur 60 par rapport au nez 30 afin que les passages de doigts 68 du radiateur 60 demeurent en coïncidence avec les orifices 74 de passage de la face 42 d'épaulement du tronçon 40 intermédiaire.

Les pions 56 de guidage permettent ainsi simultanément d'indexer angulairement le radiateur 60 et les mors 46 par rapport au nez 30.

Enfin, chaque doigt 68 d'éjection est agencé dans son passage respectif. On pourra prévoir d'interposer un patin circonférentiellement de chaque côté entre le radiateur 60 et le doigt 68 pour empêcher les doigts 68 de se décaler par rapport à leur passage. Les patins sont avantageusement réalisés en un matériaux permettant de favoriser le glissement des doigts 68 d'éjection.

Lors d'une opération d'éjection de la préforme 46, les doigts 68 occupent initialement leur position supérieure de repos comme représentée aux figures 2 et 3. Le nez 30 est déjà inséré dans le col 24 de la préforme 16 de manière que le buvant 28 soit en appui contre la face 42 d'épaulement, et les mors 46 sont contraints radialement contre la paroi cylindrique interne du col 24 pour retenir la préforme 16.

Puis, les doigts 68 sont coulissés axialement vers leur position inférieure d'éjection, jusqu'à être en appui contre le buvant 28 de la préforme 16. Les doigts 28 poursuivent leur coulissement vers le bas, sollicitant le buvant 28 pour entraîner ainsi le coulissement de la préforme 16 par rapport au nez 30, jusqu'à ce que les doigts 68 atteignent leur position inférieure d'éjection, comme indiqué à la figure 6. Le nez 30 est alors totalement sortie du col 24, et la préforme 30 est éjectée du dispositif 20 de préhension.

Le dispositif 20 de préhension réalisé selon les enseignements de l'invention permet d'éviter que les mors 46 ne se regroupent d'un seul côté du nez 30. Ceci permet notamment d'empêcher le grippage des mors 46 lors de l'insertion dans un col 24.

En outre, l'immobilisation circonférentielle des mors 46 dans une position circonférentielle déterminée permet de créer des passages 72 pour les doigts 68 d'éjection dans les mors 46 sans que ces passages 72 ne se décalent circonférentiellement par rapport aux doigts 68. Ainsi, les doigts 68 peuvent être agencés radialement au plus près du nez 30 de manière à appuyer sur toute l'épaisseur radiale du buvant 28. Ceci est notamment très avantageux lorsque l'épaisseur du buvant 28 est très faible.

## Revendications

1. Dispositif (20) de préhension d'un récipient (16) en matériau thermoplastique, notamment une préforme destinée à être conformée en un récipient final, le dispositif (20) de préhension comportant :
- un nez (30) d'extrémité inférieure qui présente un axe (B) principal et qui est adapté pour être inséré axialement dans le col (24) du récipient (16) ;
- une pluralité de mors (46) en forme de segments d'anneau qui sont répartis régulièrement autour de l'axe (B) du nez (30), qui sont espacés circonférentiellement uniquement par un jeu (j) de fonctionnement libre, et qui sont montés mobiles radialement dans le nez (30) entre une position rétractée permettant le coulissement axial libre du nez (30) dans le col (24) et une position expansée permettant la préhension du col (24) par rapport au nez (30) par serrage contre la paroi interne du col (24) ;
- des moyens (54) de rappel élastiques des mors vers leur position expansée ;
**caractérisé en ce que** l'ensemble des mors (46) est maintenu circonférentiellement dans une position circonférentielle déterminée par rapport au nez (30) par des moyens d'immobilisation circonférentiel individuels d'au moins un mors (46), le jeu (j) de fonctionnement étant laissé libre.

2. Dispositif (20) de préhension selon la revendication précédente, **caractérisé en ce que** le maintien en position circonférentielle de l'ensemble des mors (46) est réalisé par l'immobilisation circonférentielle individuelle de chaque mors (46) par rapport au nez (30) au moyen d'un pion (56) de guidage qui est fixe par rapport à l'un des éléments parmi ledit mors (46) et le nez (30), le pion (56) de guidage étant reçu en coulissement dans une rainure (58) qui est fixe par rapport à l'autre des éléments parmi ledit mors (46) et le nez (30).

3. Dispositif (20) de préhension selon la revendication précédente, **caractérisé en ce que** la rainure (58) et le pion (56) de guidage sont positionnés dans un plan (P) axial orienté selon l'axe radial de déplacement dudit mors (46).

4. Dispositif (20) de préhension selon l'une quelconque des revendications 2 ou 3, **caractérisé en ce que** le pion (56) de guidage est fixe par rapport au nez (30), tandis que la rainure (58) est fixe par rapport audit mors (46).

5. Dispositif (20) de préhension selon la revendication précédente, **caractérisé en ce que** le pion (56) de guidage présente un axe principal parallèle à l'axe (B) du nez (30).

6. Dispositif (20) de préhension selon l'une quelconque des revendications 2 à 5, **caractérisé en ce que** le pion (56) de guidage présente une forme adaptée pour permettre un débattement angulaire du mors (46) par rapport au nez (30) autour d'un axe parallèle à l'axe (B) du nez (30).

7. Dispositif (20) de préhension selon l'une quelconque des revendications précédentes, **caractérisé en ce que** les moyens élastiques de rappel sont formés par une bague (54) en matériau élastomère qui est intercalée radialement entre le nez (30) et les mors (46).

8. Dispositif (20) de préhension selon l'une quelconque des revendications précédentes, **caractérisé en ce que** le dispositif (20) de préhension comporte au moins un doigt (68) axial d'éjection du récipient (16) qui est monté coulissant axialement par rapport au nez (30) entre une position supérieure de repos dans laquelle une extrémité (70) libre du doigt (68) est agencée axialement au-dessus des mors (46), et une position inférieure d'éjection dans laquelle l'extrémité (70) libre du doigt (68) d'éjection est agencée axialement au-dessous des mors (46),
et **en ce que**, lors de son coulissement, chaque doigt (68) d'éjection est susceptible d'entrer en contact avec un cylindre (49) imaginaire circonscrivant les mors (46) en position expansée, un passage (72) étant prévu dans les mors (46) à l'intersection entre le cylindre (49) imaginaire circonscrit et chaque doigt (68) d'éjection pour permettre le coulissement de chaque doigt (68) vers sa position d'éjection sans entrer en collision avec les mors (46).

9. Dispositif (20) de préhension selon la revendication précédente, **caractérisé en ce que** les mors (46) comportent au moins un méplat formant le passage (72) du doigt (68) associé.

10. Dispositif (20) de préhension selon l'une quelconque des revendications 8 ou 9, **caractérisé en ce que** le dispositif (20) de préhension comporte une face (42) d'épaulement par rapport au nez (30) qui est destinée à venir en butée contre un buvant (28) du col lorsque le nez (30) est inséré dans le col (24), le doigt (68) d'éjection passant à travers la face (42) d'épaulement à la faveur d'un orifice (74) qui segmente la surface annulaire de butée destinée à être effectivement en contact avec buvant (28).

11. Dispositif (20) de préhension selon l'une quelconque des revendications précédentes, **caractérisé en ce qu'**il comporte un radiateur (60) qui est agencé au-dessus du nez (30) et qui s'étend en saillie radiale par rapport au nez (30).

12. Dispositif (20) de préhension selon la revendication précédente, prise en combinaison avec l'une quelconque des revendications 5 ou 6, **caractérisé en ce que** le radiateur (60) est immobilisé en rotation par une tête (64) formant l'extrémité supérieure d'au moins un des pions (56) de guidage.

13. Dispositif (18) de transport d'une préforme (16) dans un four (12) de chauffage d'une installation (10) de formage de récipients en matériau thermoplastique, la préforme (16) étant obtenue par moulage par injection et comportant, à une extrémité axiale supérieure de son corps (22), un col (24) tubulaire qui est injecté directement à sa forme définitive,
**caractérisé en ce que** la préforme (16) est maintenue sur le dispositif (18) de transport par un dispositif (20) de préhension réalisé selon l'une quelconque des revendications précédentes.

## Patentansprüche

1. Vorrichtung (20) zum Greifen eines Behälters (16) aus thermoplastischem Material, insbesondere einer Vorform, die dazu bestimmt ist, zu einem fertigen Behälter geformt zu werden, wobei die Vorrichtung (20) zum Greifen aufweist:
- eine Nase (30) eines unteren Endes, welche eine Hauptachse (B) aufweist und welche geeignet ist, axial in den Hals (24) des Behälters (16) eingesetzt zu werden;
- mehrere Spannbacken (46) in Form von Ringsegmenten, welche gleichmäßig um die Achse (B) der Nase (30) verteilt sind, welche in Umfangsrichtung ausschließlich durch ein freies Betriebsspiel (j) beabstandet sind und welche in der Nase (30) radial beweglich zwischen einer zurückgezogenen Position, die das freie axiale Gleiten der Nase (30) in dem Hals (24) ermöglicht, und einer ausgedehnten Position, die das Greifen des Halses (24) bezüglich der Nase (30) durch Andrücken an die Innenwand des Halses (24) ermöglicht, angebracht sind,
- elastische Mittel (54) zur Rückholung der Spannbacken in ihre ausgedehnte Position;
**dadurch gekennzeichnet, dass** die Gesamtheit der Spannbacken (46) in Umfangsrichtung durch individuelle Mittel der Fixierung in Umfangsrichtung wenigstens einer Spannbacke (46) in einer bestimmten Umfangsposition bezüglich der Nase (30) gehalten wird, wobei das freie Betriebsspiel (j) erhalten bleibt.

2. Vorrichtung (20) zum Greifen nach dem vorhergehenden Anspruch, **dadurch gekennzeichnet, dass** das Halten der Gesamtheit der Spannbacken (46) in einer Umfangsposition durch individuelle Fixierung jeder Spannbacke (46) in Umfangsrichtung bezüglich der Nase (30) mittels eines Führungsstiftes (56) erfolgt, welcher bezüglich eines der Elemente Spannbacke (46) und Nase (30) fest ist, wobei der Führungsstift (56) in einer Nut (58) gleitend aufgenommen ist, welche bezüglich des anderen der Elemente Spannbacke (46) und Nase (30) fest ist.

3. Vorrichtung (20) zum Greifen nach dem vorhergehenden Anspruch, **dadurch gekennzeichnet, dass** die Nut (58) und der Führungsstift (56) in einer axialen Ebene (P) positioniert sind, die entlang der radialen Achse der Verlagerung der Spannbacke (46) ausgerichtet ist.

4. Vorrichtung (20) zum Greifen nach einem der Ansprüche 2 oder 3, **dadurch gekennzeichnet, dass** der Führungsstift (56) bezüglich der Nase (30) fest ist, während die Nut (58) bezüglich der Spannbacke (46) fest ist.

5. Vorrichtung (20) zum Greifen nach dem vorhergehenden Anspruch, **dadurch gekennzeichnet, dass** der Führungsstift (56) eine Hauptachse aufweist, die zu der Achse (B) der Nase (30) parallel ist.

6. Vorrichtung (20) zum Greifen nach einem der Ansprüche 2 bis 5, **dadurch gekennzeichnet, dass** der Führungsstift (56) eine Form aufweist, die geeignet ist, einen Winkelausschlag der Spannbacke (46) bezüglich der Nase (30) um eine Achse zu ermöglichen, die zu der Achse (B) der Nase (30) parallel ist.

7. Vorrichtung (20) zum Greifen nach einem der vorhergehenden Ansprüche, **dadurch gekennzeichnet, dass** die elastischen Rückholmittel von einem Ring (54) aus elastomerem Material gebildet werden, welcher radial zwischen der Nase (30) und den Spannbacken (46) angeordnet ist.

8. Vorrichtung (20) zum Greifen nach einem der vorhergehenden Ansprüche, **dadurch gekennzeichnet, dass** die Vorrichtung (20) zum Greifen wenigstens einen axialen Finger (68) zum Auswerfen des Behälters (16) aufweist, welcher bezüglich der Nase (30) axial gleitend zwischen einer oberen Ruheposition, in welcher ein freies Ende (70) des Fingers (68) axial oberhalb der Spannbacken (46) angeordnet ist, und einer unteren Auswurfposition, in welcher das freie Ende (70) des Auswurffingers (68) axial unterhalb der Spannbacken (46) angeordnet ist, angebracht ist,
und dadurch, dass jeder Auswurffinger (68) bei seinem Gleiten dazu eingerichtet ist, mit einem imaginären Zylinder (49) in Kontakt zu kommen, der die Spannbacken (46) in der ausgedehnten Position umschreibt, wobei ein Durchgang (72) in den Spannbacken (46) am Schnittpunkt zwischen dem umschriebenen imaginären Zylinder (49) und jedem Auswurffinger (68) vorgesehen ist, um das Gleiten jedes Fingers (68) in Richtung seiner Auswurfposition, ohne mit den Spannbacken (46) in Kollision zu kommen, zu ermöglichen.

9. Vorrichtung (20) zum Greifen nach dem vorhergehenden Anspruch, **dadurch gekennzeichnet, dass** die Spannbacken (46) wenigstens eine Abflachung aufweisen, die den Durchgang (72) des zugeordneten Fingers (68) bildet.

10. Vorrichtung (20) zum Greifen nach einem der Ansprüche 8 oder 9, **dadurch gekennzeichnet, dass** die Vorrichtung (20) zum Greifen eine Absatzfläche (42) bezüglich der Nase (30) aufweist, welche dazu bestimmt ist, an einem Trinkrand (28) des Halses zur Anlage zu kommen, wenn die Nase (30) in den Hals (24) eingesetzt wird, wobei sich der Auswurffinger (68) durch die Absatzfläche (42) aufgrund einer Öffnung (74) hindurchbewegt, welche die ringförmige Anlagefläche, die dazu bestimmt ist, mit dem Trinkrand (28) tatsächlich in Kontakt zu kommen, in Segmente aufteilt.

11. Vorrichtung (20) zum Greifen nach einem der vorhergehenden Ansprüche, **dadurch gekennzeichnet, dass** sie einen Radiator (60) aufweist, welcher oberhalb der Nase (30) angeordnet ist und welcher sich radial vorstehend bezüglich der Nase (30) erstreckt.

12. Vorrichtung (20) zum Greifen nach dem vorhergehenden Anspruch in Verbindung mit einem der Ansprüche 5 oder 6, **dadurch gekennzeichnet, dass** der Radiator (60) durch einen Kopf (64), der das obere Ende wenigstens eines der Führungsstifte (56) bildet, gegen Drehung gesichert ist.

13. Vorrichtung (18) zum Transport einer Vorform (16) in einem Heizofen (12) einer Anlage (10) zum Formen von Behältern aus thermoplastischem Material, wobei die Vorform (16) durch Spritzgießen erhalten wird und an einem oberen axialen Ende ihres Körpers (22) einen rohrförmigen Hals (24) aufweist, welcher direkt in seiner endgültigen Form spritzgegossen wird,
**dadurch gekennzeichnet, dass** die Vorform (16) auf der Vorrichtung (18) zum Transport von einer Vorrichtung (20) zum Greifen gehalten wird, die nach einem der vorhergehenden Ansprüche hergestellt ist.

## Claims

1. Device (20) for gripping a container (16) made of thermoplastic material, in particular a preform intended to be shaped into a final container, the gripping device (20) comprising:
- a lower end nose (30) which has a main axis (B) and which is adapted to be inserted axially into the neck (24) of the container (16);
- a plurality of jaws (46) in the form of ring segments which are distributed regularly about the axis (B) of the nose (30), which are spaced circumferentially only by a free operational clearance (j), and which are mounted so as to be movable radially in the nose (30) between a retracted position allowing the free axial sliding of the nose (30) in the neck (24) and an expanded position allowing the gripping of the neck (24) with respect to the nose (30) by clamping against the internal wall of the neck (24);
- elastic return means (54) for returning the jaws towards their expanded position;
**characterized in that** the assembly of the jaws (46) is held circumferentially in a defined circumferential position with respect to the nose (30) by individual means for the circumferential immobilization of at least one jaw (46), the operational clearance (j) being left free.

2. Gripping device (20) according to the preceding claim, **characterized in that** the assembly of the jaws (46) is held in the circumferential position by the individual circumferential immobilization of each jaw (46) with respect to the nose (30) by means of a guide pin (56) which is fixed with respect to one of the elements among said jaw (46) and the nose (30), the guide pin (56) being received in a sliding manner in a groove (58) which is fixed with respect to the other of the elements among said jaw (46) and the nose (30).

3. Gripping device (20) according to the preceding claim, **characterized in that** the groove (58) and the guide pin (56) are positioned in an axial plane (P) oriented along the radial axis of movement of said jaw (46).

4. Gripping device (20) according to either one of Claims 2 and 3, **characterized in that** the guide pin (56) is fixed with respect to the nose (30), while the groove (58) is fixed with respect to said jaw (46).

5. Gripping device (20) according to the preceding claim, **characterized in that** the guide pin (56) has a main axis parallel to the axis (B) of the nose (30).

6. Gripping device (20) according to any one of Claims 2 to 5, **characterized in that** the guide pin (56) has a shape adapted to allow an angular deflection of the jaw (46) with respect to the nose (30) about an axis parallel to the axis (B) of the nose (30).

7. Gripping device (20) according to any one of the preceding claims, **characterized in that** the elastic return means are formed by a ring (54) of elastomer material which is inserted radially between the nose (30) and the jaws (46).

8. Gripping device (20) according to any one of the preceding claims, **characterized in that** the gripping device (20) comprises at least one axial finger (68) for ejecting the container (16) that is mounted in an axially sliding manner with respect to the nose (30) between an upper rest position in which a free end (70) of the finger (68) is arranged axially above the jaws (46), and a lower ejection position in which the free end (70) of the ejection finger (68) is arranged axially below the jaws (46),
and **in that**, during its sliding movement, each ejection finger (68) is able to come into contact with an imaginary cylinder (49) circumscribing the jaws (46) in the expanded position, a passage (72) being provided in the jaws (46) at the intersection between the circumscribed imaginary cylinder (49) and each ejection finger (68) in order to allow the sliding of each finger (68) towards its ejection position without colliding with the jaws (46).

9. Gripping device (20) according to the preceding claim, **characterized in that** the jaws (46) comprise at least one flat portion forming the passage (72) of the associated finger (68).

10. Gripping device (20) according to either one of Claims 8 and 9, **characterized in that** the gripping device (20) comprises a shoulder face (42) with respect to the nose (30) that is intended to butt against a lip (28) of the neck when the nose (30) is inserted into the neck (24), the ejection finger (68) passing through the shoulder face (42) by means of an orifice (74) which segments the annular abutment surface intended to be effectively in contact with the lip (28).

11. Gripping device (20) according to any one of the preceding claims, **characterized in that** it comprises a radiator (60) which is arranged above the nose (30) and which extends so as to project radially with respect to the nose (30).

12. Gripping device (20) according to the preceding claim, taken in combination with either one of Claims 5 and 6, **characterized in that** the radiator (60) is immobilized in rotation by a head (64) forming the upper end of at least one of the guide pins (56).

13. Device (18) for transporting a preform (16) in a heating oven (12) of an installation (10) for forming containers made of thermoplastic material, the preform (16) being obtained by injection-moulding and comprising, at an upper axial end of its body (22), a tubular neck (24) which is directly injection-moulded to its final shape,
**characterized in that** the preform (16) is held on the transport device (18) by a gripping device (20) produced according to any one of the preceding claims.
